# EUROPÄISCHE PATENTSCHRIFT

(11) **EP 1 323 523 B1**
(45) Veröffentlichungstag und Bekanntmachung des Hinweises auf die Patenterteilung: **10.05.2006**
(21) Anmeldenummer: 02028067.3
(22) Anmeldetag: 17.12.2002
(51) Int. Cl.: B32B 15/04, G10K 11/168, B60R 13/08

(54) **Dämpfungsbelag zum Entdröhnen von Blechen**
Sound absorbing antidrum covering for sheet metal
Revêtement absorbant et antisonique pour tôles

(30) Priorität: 20.12.2001 DE 10163035
(43) Veröffentlichungstag der Anmeldung: 02.07.2003
(73) Patentinhaber: Stankiewicz GmbH, D-29352 Adelheidsdorf (DE)
(72) Erfinder: Rust, Torsten, 30826 Garbsen (DE); Cunliffe, Ray, Norton, Worcester WR5 2SA (GB)
(74) Vertreter: Melzer, Wolfgang

(56) Entgegenhaltungen:
- EP-A- 0 466 513
- EP-A- 0 726 295
- DE-A- 3 830 737
- DE-A- 19 921 601
- DE-U- 9 208 184
- US-A- 2 139 882

## Beschreibung

Die Erfindung betrifft einen Dämpfungsbelag zum Entdröhnen von Blechen insbesondere Karosserieblechen von Kraftfahrzeugen, mit einer Dämpfungsschicht aus viskoelastischem Material, wie Bitumen, die zumindest punktweise fest mit dem zu entdröhnenden Blech verbindbar ist, und mit einer festen, dehnsteifen Abdeckung, insbesondere aus Metall wie Aluminium, auf der dem zu entdröhnenden Blech abgewandten Seite der Dämpfungsschicht.

Zur Körperschalldämpfung, kurz Entdröhnung, von Blech ist es bekannt, das zu entdröhnende Blech mit einschichtigen Entdröhnungsbelägen aus viskoelastischen Materialien wie Kunststoffen und Bitumen mit hoher innerer Dämpfung und hohem dynamischen Elastizitätsmodul zu belegen. In gleicher Weise ist es bekannt, Verbundsysteme zu verwenden, die aus einer viskoelastischen Dämpfungsschicht und einer meist relativ dünnen Abdeckung bestehen. Die Dämpfungsschicht oder Zwischenschicht und die feste Abdeckung sorgen für günstige körperschalldämpfende Eigenschaften. Solche Aufbauten und deren Wirkungsweisen sind grundsätzlich beschrieben in der VDI-Richtlinie VDI 3727, Blatt 1, vom Februar 1984, "Schallschutz durch Körperschalldämpfung, physikalische Grundlagen und Abschätzverfahren".

Aus dem deutschen Gebrauchsmuster DE 92 08 184 U ist ein Lärmdämpfungselement bekannt, das insbesondere zum Einbau im Inneren von Fahrzeugkarosserien bestimmt ist. Das Dämpfungselement besteht aus einem akustisch wirksamen Material, d.h. einer Entdröhnfolie, beispielsweise auf Bitumenbasis, auf deren Oberseite einer Abdeckschicht auf einem Metallblech vorgesehen ist. Die Entdröhnfolie kann ein Treibmittel enthalten.

Durch die wenn auch relativ dünne, jedoch feste und dehnsteife Abdeckung, meist aus Metall wie Aluminium, ist es schwierig, eine vollflächige Ankopplung des Dämpfungsbelages an das zu entdröhnende Blech zu erreichen, insbesondere wenn dieses produktionsbedingte Vertiefungen, Rillen, Riefen oder dergleichen aufweist. Darüber hinaus ist auch eine kraftschlüssige Verbindung des Dämpfungsbelages mit dem zu entdröhnenden Blech wesentlich. Für die kraftschlüssige Ankopplung sind Kleber, die vollflächig oder punktweise aufgebracht werden können, in den Dämpfungsbelag eingebrachte magnetische Teile sowie vollständig mechanische Klemmelemente oder Schraubelemente üblich.

Eine formschlüssige vollflächige Ankopplung des Dämpfungsbelages an das zu entdröhnende Blech kann jedoch hierdurch nicht gewährleistet werden. Darüber hinaus treten weitere Nachteile auf. Die magnetische Ankopplung ist nicht zuverlässig. Die mechanische Ankopplung erfordert erheblichen Mehraufwand und zusätzliche Elemente. Das Aufbringen des Dämpfungsbelages auf das zu entdröhnende Blech mittels Klebers ist zwar aufwendig, jedoch die zuverlässigste und meist verwendete Ankopplungsart.

Ausgehend von diesem Stand der Technik ist es Aufgabe der vorliegenden Erfindung, einen Dämpfungsbelag der geschilderten Art derart weiterzubilden, dass bei einfacher Aufbringung eine vollflächige form- und kraftschlüssige Verbindung mit dem zu entdröhnenden Blech möglich ist.

Die Aufgabe wird erfindungsgemäß mit einem Dämpfungsbelag gemäß Patentanspruch 1 gelöst.

Die vorliegende Erfindung betrifft einen Dämpfungsbelag zum Entdröhnen von Blechen, insbesondere Karosserieblechen von Fahrzeugen mit einer Dämpfungsschicht aus Bitumen, die zumindest punktweise fest mit dem zu entdröhnenden Blech verbindbar ist, und mit einer festen dehnsteifen Abdeckung insbesondere aus Metall, wie Aluminium, auf der dem zu entdröhnenden Blech abgewandten Seite der Dämpfungsschicht, wobei die Dämpfungsschicht ein Treibmittel enthält, das bei Temperatureinwirkungen in einem Temperaturbereich freigesetzt wird, der deutlich außerhalb der Umgebungs- bzw. Betriebstemperatur liegt, der dadurch gekennzeichnet ist, dass das Treibmittel durch Stickstoff gebildet ist und die Dämpfungsschicht in Gew.-% aufweist: Bitumen 50 bis 60 %, anorganischer Füllstoff 5 bis 15 %, spezifisch leichter Füllstoff 20 bis 30 %, kurze Acryl-Fasern 0 bis 5 %, Styrol-Butadien-Kautschuk 0 bis 5 % und Treibmittel 2 bis 5 %.

Vorteilhafte Weiterbildungen der Erfindung sind in den abhängigen. Ansprüchen dargestellt.

Die erfindungsgemäße Ausbildung des Dämpfungsbelages erlaubt es, eine lediglich punktweise kraftschlüssige Ankopplung an das zu entdröhnende Blech vorzunehmen. Bei der genannten Temperatureinwirkung wird das Treibmittel freigesetzt, wodurch das viskoelastische Material, insbesondere Bitumen, expandiert und eine vollflächige kraft- und formschlüssige Ankopplung an das zu entdröhnende Blech erreicht. Durch gezielte Dosierung des Treibmittels kann die Expansion des Dämpfungsbelages sehr genau eingegrenzt werden, so dass sich die Abdeckung bei Auslösung der Expansion zwar räumlich von dem zu entdröhnenden Blech abhebt, jedoch keiner Verwerfung oder Verformung unterliegt.

Da im allgemeinen mit einem Dämpfungsbelag versehene, zu entdröhnende Bleche einem Lackierverfahren unterworfen werden, das bei erhöhter Temperatur stattfindet, ist es zweckmäßig, ein Treibmittel zu verwenden, das die Expansion bei der Erhöhung der Temperatur auslöst. Während des Lackiervorganges, der in mehreren Stufen abläuft, werden die Dämpfungsbeläge eingebracht und expandieren während Trocknungsphasen.

Der erfindungsgemäße Dämpfungsbelag kann somit als Halbzeug hergestellt werden, wobei die mit dem Klebmittel versehene Seite mittels einer Abdeckfolie abgedeckt ist, die vor Ort lediglich abgezogen werden muss. Werden erfindungsgemäß als viskoelastisches Material ein Bitumen bzw. Bitumengemisch und als Treibmittel Stickstoff verwendet, kann als Abdeckfolie eine Polyethylen-Kunststofffolie verwendet werden, die in einfacher Weise recyclebar ist.

Die Erfindung wird im folgenden anhand der in der Zeichnung dargestellten Ausführungsbeispiele näher erläutert. Es zeigen:
- Fig. 1: im Schnitt einen erfindungsgemäßen Dämpfungsbelag mit Abdeckfolie,
- Fig. 2: im Schnitt den auf ein zu entdröhnendes Blech aufgelegten Dämpfungsbelag vor Expansion,
- Fig. 3: den auf ein zu entdröhnendes Blech aufgebrachten Dämpfungsbelag nach Expansion,
- Fig. 4: schematisch anhand von Messdaten den Einfluss Expansion auf die Biegeschwingungsdämpfung,
- Fig. 5: schematisch in Ansicht einen auf ein dreidimensional geformtes Blech aufgebrachten Dämpfungsbelag.

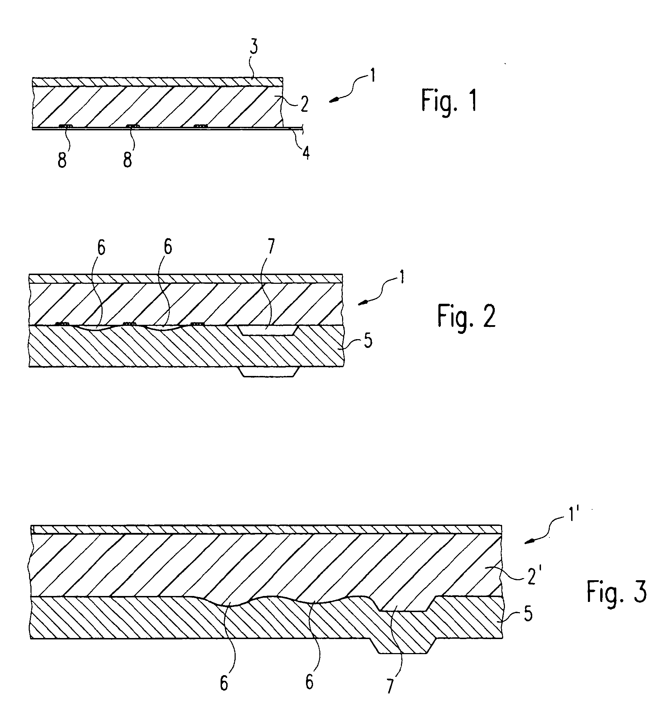

Figur 1 zeigt zunächst ein Halbzeug, nämlich einen Dämpfungsbelag 1 gemäß der vorliegenden Erfindung in nicht-expandiertem Zustand, bestehend aus einer Dämpfungsschicht 2 aus einem viskoelastischen Material, insbesondere Bitumen, das ein Treibmittel enthält, und einer festen dehnsteifen Abdeckung 3, insbesondere ein Metall. Dieses Metall der Abdeckung 3 ist aus Gewichtsgründen meist Aluminium. Die der Abdeckung 3 abgewandte Seite der Dämpfungsschicht 2 weist Klebestellen 8 auf, die mit einer Abdeckfolie 4 abgedeckt sind. Zweckmäßig ist die Verbindung einer PE-Abdeckfolie, die nach Abziehen von dem Dämpfungsbelag 1 gut recyclebar ist.

Figur 2 zeigt zunächst ein zu entdröhnendes Blech 5, insbesondere ein Karosserieblech eines Kraftfahrzeuges. Dieses Blech 5 kann z.B. konvexe oder konkave Verformungen 6, Versteifungssicken, Versteifungsrippen, Kanäle oder Rillen 7 aufweisen. Nach Abziehen der Abdeckfolie 4 ist der Dämpfungsbelag 1 aufgelegt, derart dass im Bereich der Vertiefungen 6 und Rillen 7 Hohlräume verbleiben. Eine kraftschlüssige Verbindung des Dämpfungsbelages 1 mit dem zu entdröhnenden Blech 5 erfolgt über die Klebestellen 8.

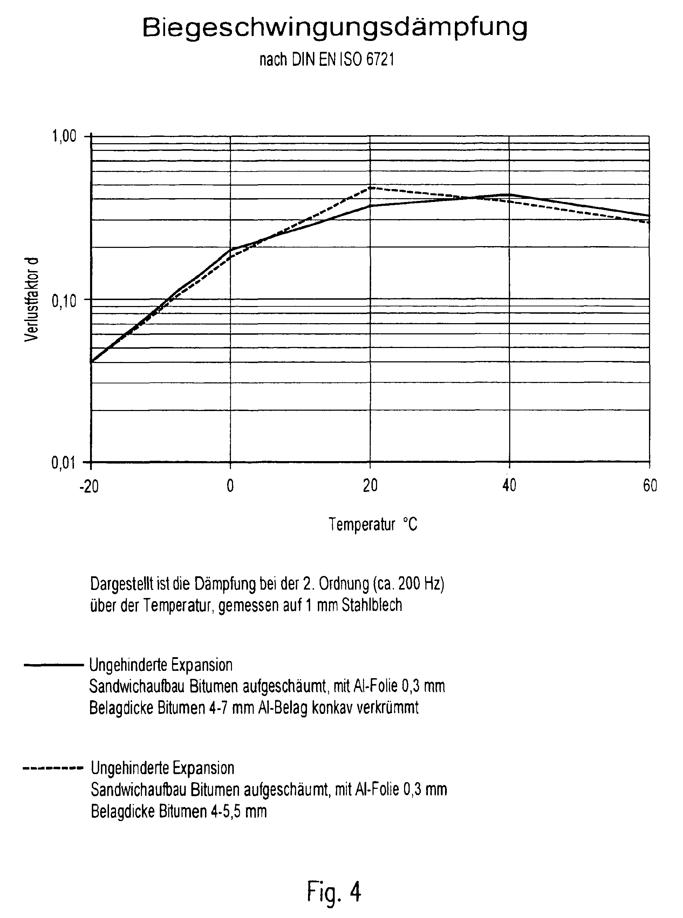

Wird der Dämpfungsbelag 1 zusammen mit dem Blech 5 über eine bestimmte Temperatur hinaus erwärmt, so wird das Treibmittel aktiviert, was eine Expansion der Dämpfungsschicht 2 zu einer Dämpfungsschicht 2' (Figur 3) bewirkt. Hierdurch wird die Abdeckung 3 von dem zu entdröhnenden Blech 5 abgehoben, wobei andererseits durch die Expansion die durch die Vertiefungen 6 und Rillen 7 bedingten Hohlräume vollständig ausgefüllt werden, wodurch sich nicht nur eine kraftschlüssige sondern vor allem auch formschlüssige Verbindung des expandierten Dämpfungsbelages 1' mit dem zu entdröhnenden Blech 5 ergibt.

Durch die Eigensteife der Abdeckung 3 ist ein gleichmäßiger Abstand der Abdeckung 3 von dem zu entdröhnenden Blech 5 gewährleistet, wobei der Abstand nach der Expansion im wesentlichen durch den Anteil des Treibmittels in der Dämpfungsschicht 2 vor der Expansion , sowie die exakte Temperaturführung während des Lackiervorganges (in einer Lackierstraße) bestimmt ist.

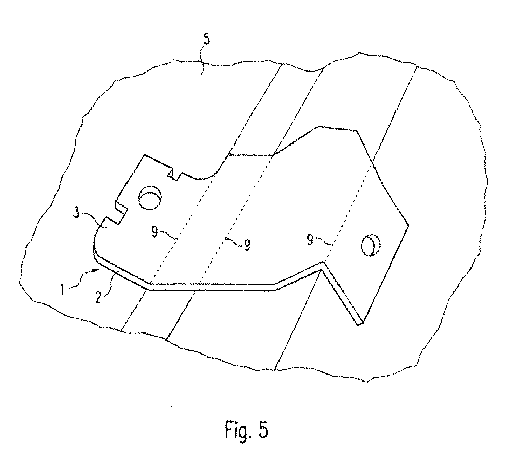

Der Dämpfungsbelag 1 wird üblicherweise als flächiges oder planes Halbzeug hergestellt. Sofern die Sollkontur des zu entdröhnenden Bleches 5 dreidimensionalen Verlauf besitzt, kann bei dem Aufbringen des Dämpfungsbelages 1 auf dieses Blech durch Krafteinwirkung eine wesentliche dreidimensionale Verformung erreicht werden. Weist das zu entdröhnende Blech 5 linear verlaufende Kanten oder Biegungen geringen Radius auf, so ist es zweckmäßig, auch den Dämpfungsbelag dreidimensional zu gestalten bzw. gestalten zu können. Letzteres wird zweckmäßig dadurch erreicht, dass Biege-Solllinien vorgesehen werden, beispielsweise durch Schwächungen in der Abdeckung 3 oder, wie in Figur 5 dargestellt, durch Perforationen 9. Somit kann der als planes Halbzeug hergestellte Dämpfungsbelag 1 leicht transportiert werden und vor Ort in einfacher Weise an den tatsächlichen Verlauf des zu entdröhnenden Bleches 5 angepasst werden. Darüber hinaus ergeben sich hierdurch klare und eindeutige Verläufe.

Übliche Lackierverfahren, wie sie in der Kraftfahrzeug-Industrie verwendet werden, finden bei erhöhten Temperaturen statt. Zweckmäßig ist es daher, das Material der Dämpfungsschicht 2 und das Treibmittel so zu wählen, dass das Treibmittel in einem Temperaturbereich von etwa 150°C bis 170°C freigesetzt wird und die Expansion auslöst. Die Menge des Treibmittels ist zweckmäßig so gewählt, dass eine Expansion um ca. 100% erreicht wird. Hierdurch wird darüber hinaus sichergestellt, dass das viskoelastische Material, insbesondere das Bitumen, der Dämpfungsschicht 2 an den Seitenrändern, an denen es freiliegt, nicht herausquillt.

Darüber hinaus werden die bei anderen Anbringmöglichkeiten inhärenten Nachteile sicher vermieden. Insbesondere sind mechanische Elemente zum Klemmen oder Verschrauben nicht mehr erforderlich und müssen auch Magnete nicht eingebracht werden. Hinsichtlich der Klebepunkte 8 genügt es, diese in einem Umfang vorzusehen, der die Haftung des Dämpfungsbelages 1 an dem zu entdröhnenden Blech sicherstellt bis der Expansionsvorgang stattfindet. Durch diesen wird zum einen die Selbsthaftung des Dämpfungsbelages ausgelöst und zum anderen die konturschlüssige ganzflächige Ankopplung an das zu entdröhnende Blech 5 erreicht, wie das bereits erwähnt worden ist.

Das erfindungsgemäße Treibmittel ist Stickstoff, das ab etwa einer Temperatur von 140°C aktiviert, z. B. aus einem einem Gemisch beigefügten Stoff freigesetzt, werden kann.

Die oben erwähnte, als vorläufig bezeichenbare Haftung des noch nicht expandierten Dämpfungsbelages 1 an dem zu entdröhnenden Blech 5 kann auch durch externe Sicherungen sichergestellt werden, etwa dann, wenn die zu entdröhnende Fläche vertikal verläuft oder jedenfalls sehr stark gegenüber der Horizontalen geneigt ist, und zwar bei Betrachtung während des Lackier- und Erwärmungsprozesses.

Der erfindungsgemäße Dämpfungsbelag ist eine Mischung, die schalltechnisch besonders wirkungsvoll ist mit folgenden Anteilen:
Bitumen mit 50 - 60 Gew.-%
Anorganischer Füllstoff mit 5 - 15 Gew.-%
spezifisch leichter Füllstoff mit 20 - 30 Gew.-%
kurze Acryl-Fasern mit 0 - 5 Gew.-%
Styrol-Butadien-Kautschuk mit 0 - 5 Gew.-% und
Treibmittel mit 2 - 5 Gew.-%.

Als anorganischer Füllstoff eignet sich insbesondere Glimmer, Kreide, Bariumsulfat u. dgl.. Als spezifisch leichter Füllstoff eignen sich z. B. Glas- oder Kunststoff-Hohlkugeln, wie z. B. "Metasphären". Kurze Acrylfasern sind nicht länger als 10mm, vorzugsweise 6mm.

Bei Verwendung von Bitumen bzw. Bitumengemisch der erwähnten Art hat es sich als zweckmäßig erwiesen, wenn die expandierte Bitumenschicht ein spezifisches Gewicht im Bereich von 1000 bis 1100 kg/m³ besitzt, während bei dem expandierten Dämpfungsbelag 1 das spezifische Gewicht der Bitumenschicht im Bereich von 450 bis 650, zweckmäßig 550 bis 610 kg/m³ ist. Hiermit kann insbesondere eine Anpassung an die im jeweiligen Einzelfall verwendeten Lackierstraßen und Erwärmungsprozesses erreicht werden. Mit einem Dämpfungsbelag 1, dessen Dämpfungsschicht 2 die erwähnte Zusammensetzung besitzt, wurde der Verlustfaktor bei einer Frequenz von ca. 200 Hertz bei den üblichen in Betrieb vorkommen Temperaturen nach DIN EN ISO 6721 "Kunststoffe. Bestimmungen der dynamischenmechanischen Eigenschaften" gemessen. Die Dämpfungen der zweiten Ordnung sind in Figur 4 dargestellt. "Zweite Ordnung" bedeutet in diesem Zusammenhang eine von den Abmessungen der Probekörper abhängige Frequenz im Bereich von 200 Hertz. Verwendet wurden Stahlstreifen mit 1mm Dicke, 300 mm Länge und 8mm Breite, entsprechend der früheren DIN 53440 "Biegeschwingungsversuch", die durch die genannte DIN EN ISO 6721 ersetzt ist.

Insgesamt erlaubt der erfindungsgemäße Dämpfungsbelag eine einfache und kostengünstige Herstellung, wobei eine ganzflächige formschlüssige Ankopplung an das zu entdröhnende Blech gewährleistet ist, wodurch sich einfache Verarbeitung und günstige schalltechnische Eigenschaften ergeben.

## Patentansprüche

1. Dämpfungsbelag zum Entdröhnen von Blechen, insbesondere Karosserieblechen von Kraftfahrzeugen,
mit einer Dämpfungsschicht (2) aus Bitumen, die zumindest punktweise fest mit dem zu entdröhnenden Blech (5) verbindbar ist, und mit einer festen dehnsteifen Abdeckung (3) insbesondere aus Metall, wie Aluminium, auf der dem zu entdröhnenden Blech (5) abgewandten Seite der Dämpfungsschicht (2), wobei die Dämpfungsschicht (2) ein Treibmittel enthält, das bei Temperatureinwirkungen in einem Temperaturbereich freigesetzt wird, der deutlich außerhalb der Umgebungs- bzw. Betriebstemperatur liegt,
**dadurch gekennzeichnet,**
**dass** das Treibmittel durch Stickstoff gebildet ist und die Dämpfungsschicht in Gew.-% aufweist: Bitumen 50 bis 60%, anorganischer Füllstoff 5 bis 15%, spezifisch leichter Füllstoff 20 bis 30%, kurze Acryl-Fasern 0 bis 5%, Styrol-Butadien-Kautschuk 0 bis 5% und Treibmittel 2 bis 5%.

2. Dämpfungsbelag nach Anspruch 1, **dadurch gekennzeichnet, dass** das Treibmittel bei einer Temperatur im Bereich von ca. 140 bis 180°C, bevorzugt 150 bis 170°C freigesetzt wird.

3. Dämpfungsbelag nach Anspruch 2, **dadurch gekennzeichnet, dass** das Treibmittel in seiner Art und Menge so bemessen ist, dass bei freier Expansion eine Expansion um nicht mehr als etwa 100% erfolgt.

4. Dämpfungsbelag nach einem der Ansprüche 1 bis 3, **gekennzeichnet durch** selbstklebende Ausrüstung, der dem zu entdröhnenden Blech (5) gegenüberliegenden Seite der Dämpfungsschicht (2).

5. Dämpfungsbelag nach einem der Ansprüche 1 bis 3, **gekennzeichnet durch** punktweise vorgesehene Klebstellen (8) auf der dem zu entdröhnenden Blech (5) gegenüberliegenden Seite der Dämpfungsschicht (2).

6. Dämpfungsbelag nach einem der Ansprüche 1 bis 5, **dadurch gekennzeichnet, dass** die Dämpfungsschicht (2) im nicht expandierten Zustand ein spezifisches Gewicht von etwa 1000 bis 1100 kg/m³ und im expandierten Zustand ein spezifisches Gewicht von etwa 450 bis 650 kg/m³ , bevorzugt 550 bis 610 kg/m³ aufweist.

7. Dämpfungsbelag nach einem der Ansprüche 1 bis 6, **dadurch gekennzeichnet, dass** der Dämpfungsbelag (1) als Halbzeug eine vor der Aufbringung auf das zu entdröhnende Blech (5) abziehbare Abdeckfolie (4) aus Polyethylen aufweist.

8. Dämpfungsbelag nach einem der Ansprüche 1 bis 7, **gekennzeichnet durch** eine Dicke der Metall- insbesondere Aluminium-Abdeckung von 0,1 bis 0,4 mm und eine Dicke der nicht-expandierten Dämpfungsschicht (2) von ca. 2,5 mm.

## Claims

1. Damping covering for the sound deadening of sheets, in particular body sheets of vehicles,
having a damping layer (2) of bitumen, which is fixedly connectable, at least point-wise, with the sheet to be sound deadened, and having a solid, extension resistant cover (3) in particular of metal, such as aluminium, on the side of the damping layer (2) away from the sheet (5) to be sound deadened, wherein the damping layer (2) contains an expansion agent which is released upon action of temperature in a temperature range which lies clearly outside the environmental or operating temperature,
**characterised in that**,
the expansion agent is formed by means of nitrogen and the damping layer, in weight percent, has: bitumen 50 to 60%, inorganic filler 5 to 15%, specific light filler 20 to 30%, short acrylic fibres 0 to 5%, styrol butadiene rubber 0 to 5% and expansion agent 2 to 5%.

2. Damping coating according to claim 1, **characterised in that** the expansion agent is released at a temperature in the range from ca. 140 to 180°C, preferably 150 to 170°C.

3. Damping coating according to claim 2, **characterised in that** the expansion agent is such that, in its kind and quantity, upon free expansion there is effected an expansion of not more than about 100%.

4. Damping coating according to any of claims 1 to 3, **characterised by** self-adhesive equipping of the side of the damping layer (2) opposite to the sheet (5) to be sound deadened.

5. Damping coating according to any of claims 1 to 3, **characterised by** adhesion points (8) provided point-wise on the side of the damping layer (2) opposite to the sheet (5) to be sound deadened.

6. Damping coating according to any of claims 1 to 5, **characterised in that**,
the damping layer (2) has, in the non-expanded condition, a specific weight of about 1000 to 1100 kg/m³, and in the expanded condition a specific weight of about 450 to 650 kg/m³ , preferably 550 to 610 kg/m³.

7. Damping coating according to any of claims 1 to 6, **characterised in that**,
the damping coating (1) has, as semi-finished product, a cover foil (4) of polyethylene, removable before the application to the sheet (5) to be sound deadened.

8. Damping coating according to any of claims 1 to 7, **characterised by** a thickness of the metal, in particular aluminium, covering of 0.1 to 0.4 mm and a thickness of the non-expanded damping layer (2) of ca. 2.5 mm.

## Revendications

1. Revêtement antisonique pour le traitement anti-vrombissement de tôles, en particulier de tôles de carrosserie de véhicules,
avec une couche antisonique (2) en bitume, qui peut être reliée fixement au moins point par point à la tôle (5) à traiter anti-vrombissement, et avec un recouvrement (3) fixe rigide à la dilatation, en particulier en métal comme de l'aluminium, sur la face de la couche antisonique (2) détournée de la tôle (5) à traiter anti-vrombissement, sachant que la couche antisonique (2) contient un porogène qui est libéré lors d'effets de température dans un intervalle de température qui est nettement en dehors de la température ambiante, respectivement de la température de service,
**caractérisé en ce que**
le porogène est formé par de l'azote et **en ce que** la couche antisonique comporte en % en poids : 50 à 60 % de bitume, 5 à 15 % de charges inorganiques, 20 à 30 % de charges spécifiquement plus légère, 0 à 5 % de fibres acryliques courtes, 0 à 5 % de caoutchouc styrène-butadiène et 2 à 5 % de porogène.

2. Revêtement antisonique selon la revendication 1, **caractérisé en ce que** le porogène est libéré à une température dans l'intervalle de 140 à 180 °C, de préférence de 150 à 170°C.

3. Revêtement antisonique selon la revendication 2, **caractérisé en ce que** le porogène est dosé du point de vue de sa nature et de sa quantité de telle sorte que, lors d'une expansion libre, il s'effectue une expansion de pas plus de 100 % environ.

4. Revêtement antisonique selon l'une des revendications 1 à 3, **caractérisé par** un apprêt autocollant de la face de la couche antisonique (2) opposée à la tôle (5) à traiter anti-vrombissement.

5. Revêtement antisonique selon l'une des revendications 1 à 3, **caractérisé par** des emplacements de collage (8) point par point sur la face de la couche antisonique (2) opposée à la tôle (5) à traiter anti-vrombissement.

6. Revêtement antisonique selon l'une des revendications 1 à 5, **caractérisé en ce que** la couche antisonique (2) présente dans l'état non expansé un poids spécifique d'environ 1000 à 1100 kg/m³ et dans l'état expansé un poids spécifique d'environ 450 à 650 kg/m³, de préférence de 550 à 610 kg/m³.

7. Revêtement antisonique selon l'une des revendications 1 à 6, **caractérisé en ce que**, comme produit semi-fini, le revêtement antisonique (1) comporte une feuille de couverture (4) en polyéthylène qui peut être détachée avant la mise en place sur la tôle (5) à traiter anti-vrombissement.

8. Revêtement antisonique selon l'une des revendications 1 à 7, **caractérisé par** une épaisseur du recouvrement de métal, en particulier d'aluminium, de 0,1 à 0,4 mm et une épaisseur de la couche antisonique (2) non expansée d'environ 2,5 mm.
